(19)

**Europäisches Patentamt**
**European Patent Office**
**Office européen des brevets**

(11)  **EP 4 215 882 B1**

(12)  ## EUROPEAN PATENT SPECIFICATION

(45)  Date of publication and mention
of the grant of the patent:
**14.05.2025  Bulletin 2025/20**

(21)  Application number: **22382032.5**

(22)  Date of filing: **19.01.2022**

(51)  International Patent Classification (IPC):
***A23F 5/00*** *(2025.01)*          ***G01F 11/24*** *(2006.01)*

(52)  Cooperative Patent Classification (CPC):
**G01F 11/24;** A23F 5/00

(54)  **DOSING DEVICE FOR A FOOD DISPENSER**

DOSIERVORRICHTUNG FÜR EINEN LEBENSMITTELSPENDER

DISPOSITIF DE DOSAGE POUR DISTRIBUTEUR D'ALIMENTS

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43)  Date of publication of application:
**26.07.2023  Bulletin 2023/30**

(73)  Proprietor: **Kibus Petcare, s.L.
08172 Sant Cugat del Vallès (ES)**

(72)  Inventors:
• **Icart Martori, Albert
08458 Sant Pere de Vilamajor (ES)**
• **Disbrey Montane, Pol
25500 La Pobla de Segur (ES)**

(74)  Representative: **Isern Patentes y Marcas S.L.
Avda. Diagonal, 463 Bis, 2°
08036 Barcelona (ES)**

(56)  References cited:
**US-A- 2 944 707        US-A- 4 572 376
US-A- 5 495 962        US-A1- 2007 187 433
US-B2- 6 550 640**

EP 4 215 882 B1

**Description**

## TECHNICAL FIELD OF THE INVENTION

The present invention is related to the field of food dispensers for pets or other living beings. More particularly, the invention is related to a device or system for dosing food, especially for dosing dry food, being said device or system couplable or attachable to a food dispenser, wherein said dry food is sprayed or watered before being delivered to the living beings. Such type of dispensers can be used to feed any kind of living being. More specifically, it may be used for pets feeding.

## STATE OF THE ART

Food dispensers have been developed for feeding pets or other animals, in which the food is dispensed using different activation methods such as some action from the animal or a pre-set timer, among others.

The existing food dispensers are designed to dose extruded or cold-pressed foods for pets or other living beings, mainly in the form of pellets or kibble. Such dispensers do not apply any further process or transformation to the food, apart from providing a metered quantity of it. Therefore, they cannot be used to serve a freshly prepared batch of rehydrated food.

The inventor has found that the dosing systems used by such dispensers are not appropriate for the dosing and rehydration of dehydrated food for pets or other living beings. The dispensers known from the prior art cannot be used to dose dehydrated food which is to be mixed with water or a water solution due to two main impediments: food blocking and non-homogeneous distribution.

Dehydrated food prepared for rehydration has a different shape and texture than extruded or cold-pressed foods: it is greasy, and it comes in the form of powder or small portions of dehydrated food. The existing food dispensers are not able to dose such type of food since the very food conditions provoke a food blocking effect: the holes throughout which the food is to be dosed get blocked by the same food, impeding a proper dosing process.

For a proper rehydration process using water or a water solution sprayed onto the dehydrated food, such food needs to be homogenously distributed throughout the recipient where it is contained. Although the existing food dispensers are able to homogenously distribute extruded and cold-pressed foods in the form of pellets or kibble, they cannot be used for a homogenous distribution of dehydrated food. When used with dehydrated food, the food is not well distributed throughout the container where it is dosed. Therefore, the food cannot be properly watered and rehydrated after dosing: a portion of the food gets an excess of water and other portions do not get enough water. As a result, the food is not properly rehydrated, and it is not in its best consuming conditions.

Consequently, the pet or the living being would not be adequately fed, causing both a wasting of food and a poor nutrition for the living being.

The dispensers known from the previous art are not intended to dose and distribute dehydrated food, which requires rehydration once dosed.

An example of food dispenser is disclosed in the U.S. Pat. No. US 2,944,707 which describes a dispensing apparatus, particularly adapted to dispense powdered material such as instant coffee or the like from an associated container. The dispensing apparatus comprises dispensing means having a such a construction and arrangement for the dispensing of differing pre-selected amounts of the material. The dispensing means are provided with a plurality of discharge valve means operatively interacting in a plurality of optionally selectable manners to provide that differing quantities of the material may be conveniently dispensed at the will of the operator.

Another example of a food dispenser was disclosed in U.S. Pat. No. 8,074,602, which describes a food dispenser for dispensing dry food, the food dispenser comprising: a food receiving module for receiving the food; a metering module for metering a quantity of the food to dispense, the metering module including an impeller having at least one arm defining a vane, the impeller being rotatably mounted in the metering module, the metering module also including a power drive unit operatively coupled to the impeller for selectively rotating the impeller; a discharge module operatively coupled to the output port for receiving the food from the output port and dispensing the food; an impeller rotation detector operatively coupled to the impeller for detecting a rotation of the impeller when the power drive unit is used to rotate the impeller. The metering module is configured and sized to discharge a predetermined quantity of the food when the impeller rotates over a predetermined rotation angle. The impeller rotation detector detects that the impeller has rotated over the predetermined rotation angle after the power drive unit has been energized to detect dispensing of the predetermined quantity of the food.

The metering module and food dispenser disclosed in the patents mentioned above have the impediments previously described and cannot be used to dose and meter dehydrated food that requires rehydration. Therefore, new developments are required to allow a proper metering and rehydration of dehydrated food for pets or other living beings.

## DESCRIPTION

In order to solve the impediments previously described, the present invention provides a dosing device attachable to a food dispenser, hereinafter referred as dosing device, for dispensing food in suitable conditions to be consumed by living beings, especially for feeding pets, dogs or the like. The dosing device comprising a tank configured to receive food, a dosing plate attachable to the tank and movable in it, comprising at least a compartment, preferably at least an inner radial compartment and an outer radial compartment configured to meter a portion of the food coming from the tank.

Alternatively, the device further comprises an inlet plate attachable to or as a part of the tank, provided with at least an inlet hole, preferably with at least an inner inlet hole and at least an outer inlet hole, wherein the dosing plate is configured to block or unblock the inlet hole, preferably to block or unblock the inner inlet hole and/or the outer inlet hole, by the movement of the dosing plate, and the compartment, preferably the inner radial compartment and the outer radial compartment are configured to establish fluid communication respectively with the inlet hole, the inner inlet hole and with the outer inlet hole.

The device also comprises an outlet plate attachable to or as a part of the tank, comprising at least an outer hole, preferably at least an inner outlet hole and at least an outer outlet hole configured to establish fluid communication with the compartment, preferably with the inner compartment and/or with the outer compartment by the movement of the dosing plate and also said inner and outer compartments being blocked or unblocked against the outlet plate by the movement of said dosing plate.

Alternatively, the device further comprises an additional intermediate plate, adjacent to the inlet plate, the intermediate plate comprising at least an intermediate hole, preferably, at least an inner intermediate hole and at least an outer intermediate hole, configured to be respectively aligned with the inlet hole, the inner inlet hole and with the outer inlet hole and to establish fluid communication with the compartments of the dosing plate.

According to the claimed invention, the device comprises watering means configured to water the food after being dosed, this watering means being a nozzle comprised by the dosing device, i.e., attachable to the outlet plate, wherein the nozzle is configured to spray a water cone over the food once dosed. In order to provide a suitable watering, the nozzle must be placed over the food according to the following formula:

$$H = R / \tan(h) - k$$

$H = R / \tan(h) - k$ wherein:

H: height of the nozzle over the food (or the bowl) in millimeters
R: radius of the bowl in millimeters
tan: tangent
h: mathematical constant, in the range of 30 - 90, preferably in the range of 60 - 68, particularly 64, and
k: mathematical constant, in the range of 0 - 20, preferably in the range of 9 - 12, particularly 10.6.

With this formula, the size of a bowl or tray, where the food can be dosed, and/or the nozzle height can be adjusted for a proper rehydration of the dosed food.

The device may also comprise moisture extraction means configured to reduce or eliminate the humidity in the dosing device, especially the humidity located at the outlet plate to prevent the food from being unintentionally moistened. To favour humidity extraction, alternatively the outlet plate has a plurality of ribs configured to partially enclose the outlet hole, preferably to partially enclose the inner inlet hole and/or the outer inlet hole, being configured said plurality of ribs to enable the aeration of said outlet plate by extracting humidity to the outside.

Alternatively, the device comprises removing means configured to propel and remove the food loaded or stored in the tank. Preferably the removing means are formed as an agitator attachable to the tank. Particularly, the agitator is operatively connected through a rotation axis to the dosing plate and is rotatable around said rotation axis. The agitator is provided with blades, wherein at least one of these blades can be disposed in a different height from the others regarding the axial direction of the rotation axis.

The dosing device further comprises driving means configured to drive the dosing plate and/or to drive the removing means.

In another embodiment, the invention discloses a food dispenser for dispensing food automatically, wherein said dispenser comprises at least a main frame or body to which the dosing device, as it has been previously described, is attachable.

Once the dosing device is attached or coupled to the food dispenser, the food, which could have been previously stored in the tank or loaded after the attachment, falls by gravity, and preferably can be also propelled by the removing means, passing through the series of plates in such a way that the food is distributed uniformly, preferably in a bowl or tray of the dispenser. Once dosed, the food can be watered, in such a way that the dosed portion of food, as it was previously uniformly distributed, is also homogeneously moisturized after being watered.

Alternatively, the food could be watered in the tank before being sent through the plates for dosing, distributing and dispensing.

In other embodiments, the device comprises heating means configured to heat the water before the watering, or to heat the tank and/or the food located in the tank or even to heat the food once dispensed and watered.

It is important to highlight that the existing food dispensers were designed to meter a specific quantity of extruded or cold-pressed food and not for the homogenous distribution of dehydrated food, which is much greasier and may come in a floury form, neither for moistening said dehydrated food and much less for heating it.

Therefore, the main advantage of the dosing device here disclosed and its related dispenser is the ability of dispensing dry food or dehydrated food, specially the greasier and flourier type. It allows the uniform distribution of said food and a homogeneous moistening by watering the food and a homogeneous heating of said food. Hence, the food dispensed is properly distributed, moistened and heated, reaching the adequate consuming conditions, including taste and smell, for pets or other living beings.

According to the invention, the watering device is attachable to the dosing device as it was disclosed before. Furthermore, the nozzle of the watering device can take part of the watering means of the dosing device previously described.

In a second aspect, the invention provides a food dispenser provided with the dosing device as it was described.

Other advantages and features of the present invention will become clearer upon reading of the following non-restrictive description of preferred embodiments thereof, given as an example only with reference to the accompanying drawings.

**BRIEF DESCRIPTION OF THE FIGURES**

The foregoing and other advantages and features will be better understood from the following detailed description of exemplary embodiments with reference to the accompanying drawings, which should be considered by way of illustration and not limitation, wherein:

- Fig. 1 is an exploded view of the dosing device of the invention.
- Fig. 2 is a perspective view of the tank with the outlet plate being integrated in or part of the said tank.
- Fig. 3 is a general view of the dosing device installed in a food dispenser according to an alternative embodiment of the invention.
- Fig. 4 is a general perspective cross section view of the dosing device installed in a food dispenser according to an alternative embodiment of the invention, wherein parts of the watering means or the watering device, particularly the nozzle, are shown.

**DETAILED DESCRIPTION OF AN EXEMPLARY EMBODIMENT**

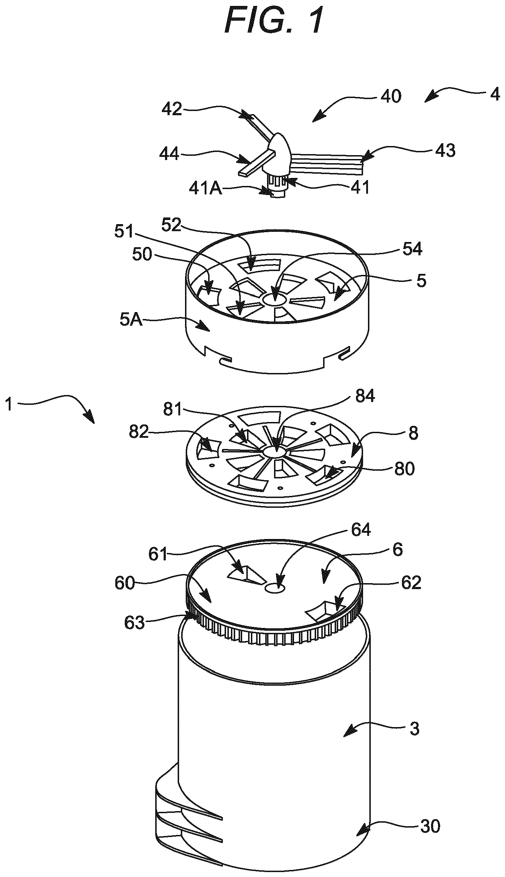

In a preferred embodiment, shown in figure 1, the present invention discloses a dosing device 1, hereinafter referred as device 1, for dosing food in suitable conditions to be consumed by living beings, especially for feeding pets, dogs or the like, or, depending upon the food used, to be consumed by human beings. In the device 1, the food falls by gravity, and can be also propelled by removing means 4, from a tank 3, where the food could be previously stored or loaded at the moment, to a bowl, tray or similar, or even to the ground, through a series of plates 5 6 7 8 operatively connected or provided in and/or attachable to the tank 3 in such a way that the food is dosed and dispensed in a uniformly distributed manner. After that, the food may be watered or moistened, if the food is of the dehydrated type, in such a way that the dosed portion of food becomes homogeneously hydrated or rehydrated after being watered. Alternatively, the food could be watered in the tank 3 before being sent through the plates 5 6 7 8 for dosing, distributing and dispensing.

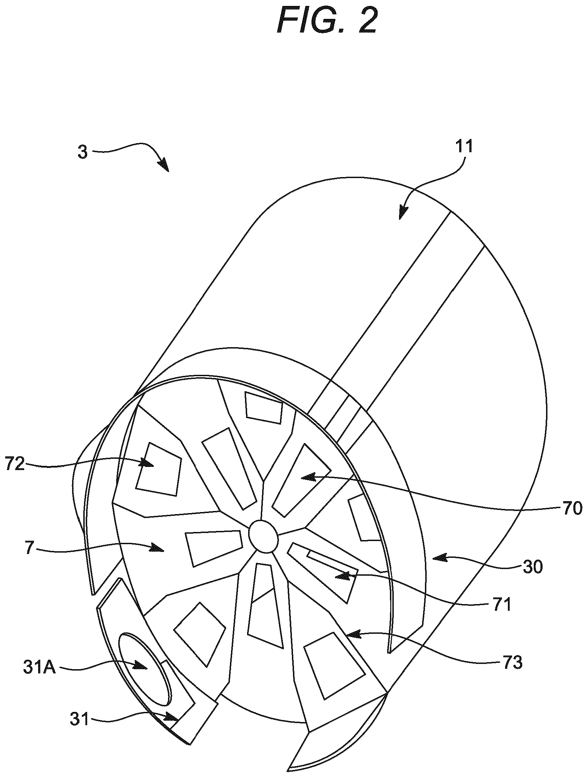

In the preferred embodiment shown in figures 1 and 2 for dosing, distributing and dispensing the food, the device 1 comprises an inlet plate 5 as a part of, or operatively connectable to, or attachable to the tank 3, comprising at least an inner inlet hole 51 and at least an outer inlet hole 52 configured to enable the food to pass through said inlet plate 5, being said holes 51 52 able to be blocked or unblocked by a dosing plate 6 which is also attachable and movable related to the tank 3, being said dosing plate 6 operatively connected with the removing means 4 and comprising at least an inner compartment 61 and an outer compartment 62, said inner 61 and outer 62 compartments are configured to establish fluid communication with the inner inlet hole 51 and with the outer inlet hole 52, and also are configured to dose/meter a portion of the food coming from the inner inlet hole 51 and/or from the outer inlet hole 52 of the inlet plate 5. In this regard, the inner compartment 61 and the outer compartment 62 are sized in such a way that the food entered in said compartments 61 62 is a metered portion of food, allowing the device 1 to dose a specific quantity of food which will be later dispensed to the living being. Preferably the size of those compartments 61 62 is suitable for receiving and metering greasy and floury dehydrated food.

The device 1 comprises an outlet plate 7, which is also provided as part of, or operatively connectable to, or attachable to the tank 3, comprising at least an inner outlet hole 71 and an outer outlet hole 72 configured to be respectively at least partially aligned with the inner compartment 61 and the outer compartment 62 establishing fluid communication between them, and, in operation, allowing the portion of the food, coming from the inner compartment 61 and/or from the outer compartment 62, to be dosed, wherein said inner 61 and outer 62 compartments can be blocked or unblocked against said outlet plate 7 by the movement of the dosing plate 6.

Driving means are provided in the device 1 configured to drive the removing means 4 to agitate or propel the food disposed or storable in the tank 3 to pass through the inner inlet hole 51 and/or through the outer inlet hole 52, and also to drive the dosing plate 6 to unblock the inner inlet hole 51 and the outer inlet hole 52, so the food enters in the inner compartment 61 and/or in the outer compartment 62 of the dosing plate 6. The latter moves to a position where it blocks the inner inlet hole 51 and the outer inlet 52 hole of the inlet plate 5, and matches the inner compartment 61 and the outer compartment 62 with the inner outlet hole 71 and/or with the outer outlet hole 72 to dose the portion of the food previously metered in the inner 61 and outer 62 compartments of the dosing plate 6.

The device 1 further comprises an intermediate plate 8, adjacent to the inlet plate 5, said intermediate plate 8 comprising at least an inner intermediate hole 81 and at least an outer intermediate hole 82 configured to be respectively aligned with the inner inlet hole 51 and with the outer inlet hole 52. The intermediate plate 8 is configured to avoid friction forces between the inner plate 5 and the dosing plate 6 that could be caused by food stuck between these two said plates, and could also assist the dosing plate 6 in metering the food. Preferably, the intermediate plate 8 is made of a flexible material, a polymer or similar, like silicone. The intermediate plate 8 is configured to avoid the blocking or obstruction of the holes of the inlet plate 5 and/or the compartments of the dosing plate 6 that may occur if the food is stuck between the inlet plate 5 and the dosing plate 6. In this regard, the intermediate plate 8 acts as a wiper or scraper of the dosing plate 6.

As it can be observed in the figure 1, in the preferred embodiment, the inlet plate 5 is a circular plate, wherein the inner inlet hole 51 and the outer inlet hole 52 are spaced from each other in a radial direction of the inlet plate 5, being considered as inner radial inlet hole 51 and outer radial outlet hole 52. The foregoing is also applicable for the dosing plate 6, the outlet plate 7 and the intermediate plate 8, which are also formed as disc plates in the preferred embodiment. Hence, the inner compartment 61 and the outer compartment 62, are also spaced from each other in a radial direction of the dosing plate 6, the inner intermediate hole 81 and the outer intermediate hole 82 are spaced from each other in a radial direction of the intermediate plate 8 and, finally, the inner outlet hole 71 and the outer outlet hole 72 are spaced apart from each other in a radial direction of the outlet plate 7.

Moreover, the inlet plate 5 has a plurality of inner inlet holes 51 and a plurality of outer inlet holes 52. Also, preferably, the outlet plate 7, shown in figure 2, comprises a plurality of inner outlet holes 71 and a plurality of outer outlet holes 72. The number of holes, its size and shape are selectable or configurable for dispensing and meter the precise quantity of food that will be dispensed through a full turn of the dosing plate 6.

As shown in figures 1 and 2, in the particular embodiment, the inlet plate 5 has five inner inlet holes 51 and five outer inlet holes 52, the outlet plate 7 has also five inner outlet holes 71 and five outer outlet holes 72, whereas the dosing plate 6 has only one inner compartment 61 and one outer compartment 62. In this manner, in operation, the driving means drive the removing means 4 to agitate or propel the food in the tank 3 to pass through the plurality of inner inlet holes 51 and/or through the plurality of outer inlet holes 52, wherein the food is able to pass only through those inner 51 or outer holes 52 unblocked by the dosing plate 6, so the food enters in the inner compartment 61 and/or in the outer compartment 62 of the dosing plate 6. Following that, the dosing plate 6 moves to a position where it blocks the plurality of inner inlet holes 51 and the plurality of outer inlet holes 52 of the inlet plate 5, and matches the inner compartment 61 and/or the outer compartment 62 with one of the inner outlet holes 71 and/or with one of outer outlet holes 72 to dose the portion of the food metered in said compartments 61 62 of the dosing plate 6. Moving repeatedly the dosing plate 6, the food is dispensed trough each of the plurality of the inner outlet holes 71 and/or the plurality of the outer outlet holes 72, distributing the food homogeneously.

At this point, the food can be watered by using watering means, and also, if required, it can be heated by heating means provided in the device 1, so that the food will be homogeneously hydrated and heated, which makes said food more pleasant and, therefore, more palatable to be consumed by the living beings. Preferably, in order to heat the food, before the watering takes place, the water can be heated, so it is the heated water that heats the food. Alternatively, the food could be watered and heated in the tank 3 before being sent through the plates 5 6 7 for dosing, distributing and dispensing.

The intermediate plate 8 comprises a plurality of inner intermediate holes 81 and a plurality of outer intermediate holes 82 which match one by one with each of the plurality of inner inlet holes 51 and outer inlet holes 52. In the preferred embodiment the intermediate plate 8 has five inner intermediate holes 81 and five outer intermediate holes 82.

Preferably, as shown in figure 1, the device 1 further comprises a plate frame 5A engageable to the tank 3, being the inlet plate 5 provided as a part of the plate frame 5A, and wherein the dosing plate 6 is engageable to the plate frame 5A, but freely movable in it. In this regard, the intermediate plate 8 is also engageable to the inlet plate 5, and the outlet plate 7 is engaged after the dosing plate 6 to the plate frame 5A. After these plates 6 7 8 have been mounted in the plate frame 5A, the latter is then mounted to the tank 3. This is advantageous for dismounting such assembly and for the easy cleaning of each individual part of the assembly. Also, in case of any of the aforementioned plates is damaged, it can be easily replaced.

Furthermore, the outlet plate 7 can be provided as a part of the tank 3 in a lower end 30 of said tank 3, as is shown in figure 2. Thus, the plates 6 8 are assembled in the plate frame 5A with the inlet plate 5 being part of the same, the intermediate plate 8 mounted to the inlet plate 5, and the dosing plate 6 being mounted to the plate frame 5A, but freely movable in it. After that, the assembly in the plate frame 5A is engaged to the tank 3, with the outlet plate 7 being part of it.

As mentioned before, the device 1 comprises driving means configured to drive the removing means 4 and/or the dosing plate 6. That is to say the inlet plate 5, the intermediate plate 8 and the outlet plate 7 are provided or attached in a fixed position regarding the tank 3 or the plate frame 5A. In the preferred embodiment, the driving means comprising a motor 11, or similar drive, configured to drive the dosing plate 6 and/or the removing means 4. In the embodiment illustrated in figure 1, the dosing plate 6 is a disc plate with gear teeth 63 at its periphery. Hence, in this embodiment, the motor 11 has in its output a driving gear (not shown) and the dosing plate 6 is the driven gear. The skilled in the art would see that this embodiment is not a limitation, as other type of mechanisms could be used within the scope of the invention, like a gear worm mechanism, a pulley and sprocket, or the motor 11 directly activating the dosing plate 6, among others.

From the figure 1 it can be observed that the removing means 4, comprising an agitator 40 attachable to the tank 3, being said agitator 40 rotatable around a rotation axis 41 which is operatively connected to the dosing plate 6 and/or to the driving means. That is to say that it could be possible to have a motor to drive the dosing plate, and another motor to drive the agitator 40. In the preferred embodiment, the dosing plate 6 and the agitator are moved simultaneously, hence, at the end of the rotation axis 41 is disposed a male connector 41A configured to engage with a female connector (not shown) provided in a centre hole 64 of the dosing plate 6. This engagement is of the "quick release" type and, when they are engaged, the agitator 40 rotates with the dosing plate 6 as the latter is driven by the motor 11.

Moreover, the agitator 40 comprises at least a blade, preferably a plurality of blades, more preferably three blades 42 43 44 located at different heights regarding the axial direction of the rotation axis 41. These three blades 42 43 44 are spaced along the axial direction of the rotation axis 41 and are orientated in a transversal direction to the rotation axis 41, being essentially parallel to the inlet plate 5. The design and distribution of the blades 42 43 44 makes it possible to avoid the blocking of the food in the tank 3 and the obstruction of the inlet holes 51 52 of the inlet plate 5. As it would be render obvious for the skilled in the art, the inlet plate 5 and the intermediate plate 8 have respectively centre holes 54 84 for allowing the operative engagement of the rotation axis 41 with the dosing plate 6.

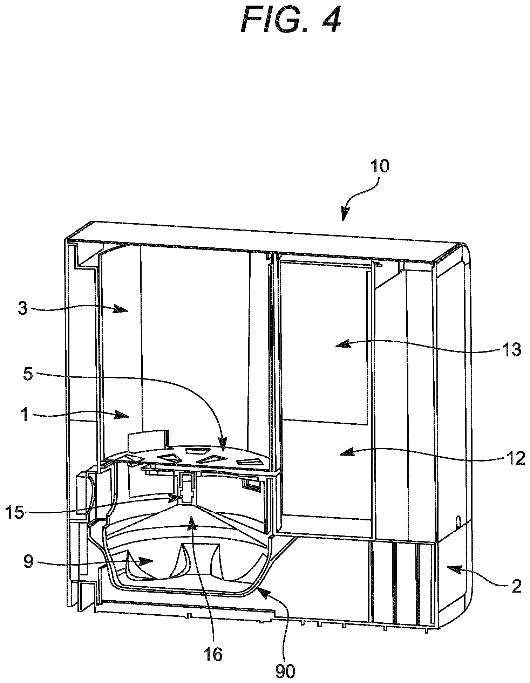

As previously mentioned, the food can be watered, if it is of the dehydrated type, in such a way that the dosed portion of food, as it was previously uniformly distributed, can be also homogeneously hydrated after being watered. Hence, as shown in figure 4, the device 1 comprises watering means formed by at least a nozzle 15 configured to water the food. Preferably, the nozzle 15 is suitable provided in the device 1, preferably close, near or adjacent to the outlet plate 7, so that the food can be watered once it has been homogenously dosed and distributed.

In the preferred embodiment shown figure 4, the nozzle 15 could be placed on the outlet plate 7 in a way that a water spray cone 16 is injected beyond said outlet plate 7, outer the device 1 and over the food once dosed.

Hence, the nozzle 15 is configured to inject the water spray cone 16 over the food once dosed. In order to provide a suitable watering, the nozzle 15 must be placed over the food according to the following formula

$$H = R / t(h) - k$$

wherein:

H: height of the nozzle over the food (or a bowl or tray) in millimeters
R: radius of a bowl or tray in millimeters
t: tangent
h: mathematical constant, in the range of 30 - 90, preferably in the range of 60 - 68, particularly 64, and
k: mathematical constant, in the range of 0 - 20, preferably in the range of 9 - 12, particularly 10.6.

With this formula the height of the nozzle 15 regarding to the dosed food and the size of the bowl 9 (disclosed later), tray or the like, can be adjusted for a proper rehydration.

With the formula, it could be possible to configure the water spray cone 16 injected by the nozzle 15 in order to adjust the different height or size regarding the dosed food or regarding the bowl 9 (disclosed later) or tray, or the like.

Alternatively, the food could be watered in the tank 3 before being sent through the plates 5 6 7 8 for dosing, distributing and dispensing. In such case, the nozzle 15 could be located in the tank 3 in order to water the food before being dosed.

Preferably, the food could be heated by heating means (not shown) configured to heat the food located in the tank 3, or, preferably, to heat the food after dosed and watered (hydrated). Alternatively, the food could be heated through hot water (previously heated) or a heater could be operatively engaged with the nozzle, so that when the water is injected by the nozzle over the food, it could be heated at the same time. Heating the food by heating the water is advantageous as the food gets also uniformly heated.

As the food may be of the dehydrated type, the device 1 can also comprise moisture extraction means configured to reduce or eliminate the humidity at any point in the device 1 that would cause an unintentionally hydration of the food stored in the tank 3, especially in the plates 5 6 7 8, particularly in the outlet plate 7, before the food is dosed. Thus, the moisture extraction means comprise a blower or fan (not shown) attachable to the tank 3 and/or to the plate frame 5A, configured to blow fresh air to dry the drops of water or general moisture after the food has been watered.

As it is well known, as soon as the dehydrated food gets in contact with a minimum quantity of water or liquid, or even with water steam, the moistening process of the food begins. In the preferred embodiment, the moistening of the food is to happen after the food has been dosed, not before.

Elongated plates 31 can be attached to the tank 3 or the distribution plate 5A or as a part of them. They are meant to restrain the water sprayed by the nozzle. That is to say that the elongated plates 31 are configured to avoid the watering of anything other than the food once dispensed. The elongated plates 31 may also include apertures 31A configured to allow the fresh air passing through in order to direct the moisture outside of the device 1.

Also, as shown in figure 2, the outlet plate 7 comprises a plurality of ribs 73 that partially enclose the inner outlet hole 71 and/or the outer outlet hole 72, being configured said plurality of ribs 73 to allow the aeration of the outlet plate 7 by extracting humidity to the outside of the device 1. In this regard, the air could flow inward or outward the device to dry the moistening on and/or outward the outlet plate 7. Hence, these ribs 73 are configured to direct the flow of air generated naturally or by the blower or fan of the moisture extraction means, to the outside, to remove all the humidity on the outlet plate 7. This helps drying said outlet holes 71 72 after the food is watered. As mentioned previously, the moisture in the device should be avoided to prevent unintentional hydration of the dry food. In not depicted embodiments, the ribs 73 are provided in the distribution frame 5A.

In addition, the device 1 comprises electronic or processing control means (not shown), like a CPU or similar, in order to control the general functioning of said device 1. The electronic means could receive a signal from a food level sensor (not shown) provided in the tank 3, to know the quantity of food stored in the tank 3, they could also send an action signal to the driving means to drive the removing means 4 and/or the dosing plate 6 to dispense the food, as well as controlling the watering means to water the food, or the heating means to heat the food, or activating the moisture extraction means. Furthermore, the electronic control means make it possible to control the device 1 remotely, for example by wireless communication through the internet or by a handheld device. Through a software program, an App or the like, a user can send commands, program the device 1, check the quantity of food dispensed, and more.

Other functionalities like timers for delivering the food, alarms or warning signals, for example for a low level of food in the tank 3 or a low level of water to moisture the food, can be settled with this electronic control means and its associated computer programs.

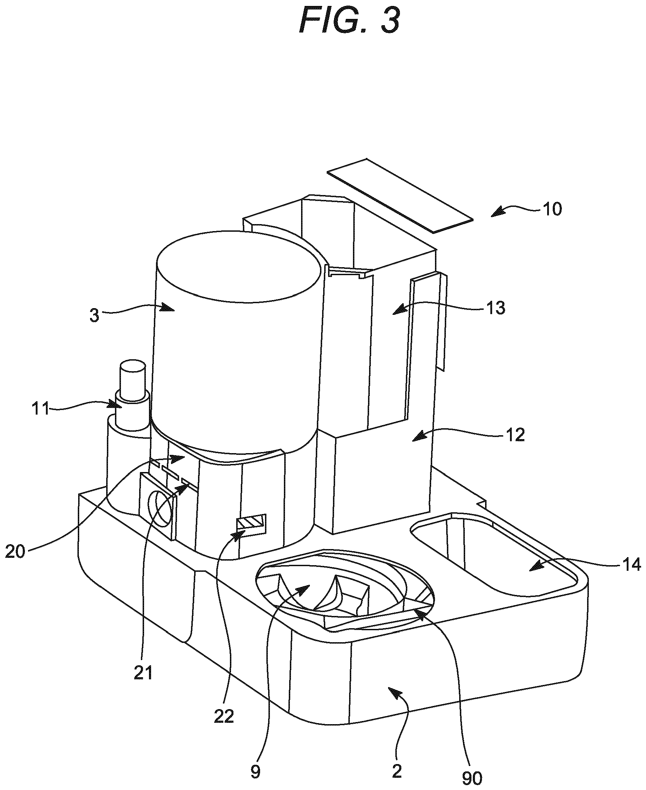

Further functionalities, based on the electronic control means, could be settled in the device, like wireless or remote control, allowing the electronic control means to determine the amount of food to be dosed and the day and time in which the dispensing will take place. The electronic means could also allow the inclusion of a camera system on the food dispenser (figure 3) to interact with the animal remotely.

In another preferred embodiment, as shown in figure 3, the present invention provides a food dispenser 10, "dispenser" 10 hereinafter, for dispensing food in suitable conditions to be consumed by living beings, especially for feeding pets, dogs or the like, wherein the dosing device 1, as previously described, is installable or attachable to a main frame 2 of the food dispenser 10.

As it can be observed from the figure 3, the dispenser 10 comprises a main frame 2 to which the tank 3 is engageable, particularly the tank 3 can be attached to a distribution frame 20 of the dispenser 10.

The dispenser 10 may also comprise driving means configured to drive the removing means 4 and the dosing plate 6 of the device 1. For example, the motor 11 could be mounted on the distribution frame 20 to drive the dosing plate 6. Since the dosing plate 6 is a disc plate with gear teeth 63 at its periphery, the motor 11 has at its output a driving gear (not shown) to drive said dosing plate 6. Other type of mechanisms could be used within the scope of the invention, like a gear worm mechanism, a pulley and sprocket, wherein the driving element, like the motor 11 is provided in the dispenser 10, while the driven elements, like the dosing plate 6 or the agitator 40, are provided in the device 1, etc.

In a similar way, part of the watering means could be part of the dispenser 10. In this regard, a water tank 13 for storing water or liquid, is engageable to a tank frame 12 which is, at the same time, engageable to the main frame 2, wherein the nozzle 15 of the device 1 is in fluid communication with the water tank 13.

Furthermore, the watering means also comprise a water bowl 14, configured to receive a quantity of water to be drunk by pets or other living beings. The water bowl 14 could be supplied with water from the water tank 13, being the dispenser 10 provided with suitable means, like a pump and its accessories, to control and dispense the water from the water tank 13 to the different parts where it is required. Alternatively, this suitable means, like a water pump or similar and its accessories, to control and dispense the water, could be provided in the device as a part of the watering means.

The moisture extraction means, or part of them, could be mounted on the main frame 2 of the dispenser 10. That is to say, the blower or fan (not shown) could be attachable to the distribution frame 20 and configured to blow fresh air into said distribution frame 20 in order to dry the drops of water or the general moisture at the outlet plate 7, after the food has been watered. The distribution frame 20 comprises a first plurality of through holes 21 and a second plurality of through holes 22, wherein said pluralities of through holes 21 22 are configured to allow the air to flow through the distribution frame 20 to evacuate or dry the undesired moisture, drops or water steam remaining after the food has been watered and delivered.

The elongated plates 31 and the outlet plate 7 of the device 1 could also be a part of the main frame 20 of the dispenser 10 instead of being part of the tank 3, both elements configured to perform the same functions previously described. The plurality of ribs 73 could also be part of the main frame 20 of the dispenser 10 instead of being part of the dosing device 1, for the same purposes previously described.

Hence, in the dispenser 10 the aeration could be held through the holes 21 22 and the apertures 31A of the elongated plates 31 to the enclosed area formed by the plurality of ribs 73 of the outlet plate 7 in order to eliminate the undesired humidity or to dry the drops on the outlet plate 7 after watering the food

As it can be observed in figure 3, the dispenser 10 further comprises a bowl 9 which is engageable to a bowl carrier 90 inside the main frame 2, said bowl carrier 90 is movable and it is configured to move the bowl 9 from a filling position, below the outlet plate 7, where said bowl 9 is filled with food coming from the outlet plate 7 to an external feeding position where living beings can eat from said bowl 9. Furthermore, when the dosed food in the bowl 9 is being watered, the elongated plates 31 provide an enclosing over the bowl 9 to direct the whole sprayed water to food, preventing the water from going to other parts of the device.

In addition, the dispenser 10 comprises electronic or processing control means (not shown), like a CPU or similar, in order to control the general functioning of said dispenser 10. This electronic or processing control means can be linked with the electronic control means of the device 1 or can replace or superimpose over the electronic control means. In a similar way, the electronic or processing control means could receive a signal from a food level sensor (not shown) to know the quantity of food stored in the tank 3 and also could send a drive signal to the driving means to drive the removing means 4 and/or the dosing plate 6 to dispense the food in the bowl 9, as well as controlling the watering means (the activation of the nozzle 15), to water the food in the bowl 9, or the heating means to heat the food, or to move the bowl carrier 90 inside or outside to dispense the prepared food, or to activate the blower of the moisture extraction means.

Other functionalities like timers for delivering the food, remote or wireless control of the dispenser 10, alarms or warning signals, for example for a low level of food in the tank 3 or a low level of water in the water tank 13 by using water level sensors or the like, or remote programming of the dispenser 10 can be settled with these processing control means and they could send this data and receive instructions to/from a hand-held device or to/from a computer device by communication means provided as part of said processing control means. Hence, the functioning of the device 1 and the dispenser 10 could be settled through a computer program (app, software, or the like) installed and ran in said hand-held device or in the computer device. Further features like the quantity (in weight) of food dispensed and the water used for moistening the food can be controlled through the suitable sensors and the processing control means.

The dosing device 1 could also include an RFID tag and the food dispenser 10 could include an RFID reader, so that when the dosing device 1 is incorporated into the dispenser 10, some predefined cooking parameters could be set (e.g.: food-water ratio, watering and rehydration time, heating temperature) adapted to the specific food recipe contained in the dosing device 1. This would allow the food dispenser 10 to dose, prepare and dispense food in the perfect consuming conditions.

## Claims

1. Dosing device (1) for a food dispenser, comprising:

   - a tank (3) configured to receive and store food;
   - a dosing plate (6) movable regarding to the tank (3) comprising at least a compartment (60) configured to receive and meter the food; and
   - an outlet plate (7) comprising at least an outlet hole (70), the outlet plate (7) being configured to block or unblock the compartment (60), and wherein the compartment (60) is configured to establish fluid communication with the outlet hole (70);

   **characterised in that** it comprises:

   - at least a nozzle (15) configured to inject a water spray cone (16) over the food once dosed in a bowl or tray by the dosing device (1), wherein the nozzle (15), provided in the dosing device (1), is configured to be placed over the food according to the following formula

   $$H = R / \tan(h) - k$$

   wherein:

   H: height of the nozzle (15) over the food in millimeters
   R: radius in millimeters of the bowl or tray where the food is dosed tan: tangent
   h: mathematical constant, in the range of 30 - 90, preferably in the range of 60 - 68, particularly 64, and
   k: mathematical constant, in the range of 0 - 20, preferably in the range of 9 - 12, particularly 10.6.

2. The device of the claim 1 further comprises an inlet plate (5) comprising at least an inlet hole (50); wherein the dosing plate (6) is configured to block or unblock the inlet hole (50), and wherein the inlet hole (50) is configured to establish fluid communication with the compartment (60).

3. The device of the claim 2 further comprises an intermediate plate (8) adjacent to the inlet plate (5), the intermediate plate (8) comprising at least an intermediate hole (80) configured to be aligned with the inlet hole (50) and to establish fluid communication with the compartment (60) of the dosing plate (6).

4. The device of the claims 1 to 3 wherein the inlet plate (5) comprises at least an inner radial inlet hole (51) and at least an outer radial inlet hole (52), the dosing plate (6) comprises at least an inner radial compartment (61) and an outer radial compartment (62), the outlet plate (7) comprises at least an inner radial outlet hole (71) and an outer radial outlet hole (72), and the intermediate plate (8) comprises at least an inner radial intermediate hole (81) and at least an outer radial intermediate hole (82), wherein

     the inner radial inlet hole (51) and the outer radial outlet hole (52) are configured to be blocked or unblocked by the dosing plate (6), and the inner radial compartment (61) and the outer radial compartment (62) are configured to establish fluid communication with the inner inlet hole (51) and with the outer inlet hole (52);
     the inner outlet hole (71) and the outer outlet hole (72) are configured to be respectively at least partially aligned with the inner compartment (61) and the outer compartment (62) establishing fluid communication thereto, wherein said inner radial compartment (61) and outer radial compartment (62) are configured to be blocked or unblocked against the outlet plate (7) by the movement of the dosing plate (6); and
     the inner intermediate hole (81) and the outer intermediate hole (82) are configured to be respectively aligned with the inner inlet hole (51) and with the outer inlet hole (52).

5. The device of any of the preceding claims further comprises moisture extraction means configured to reduce or eliminate the moisture in the device and/or in the food.

6. The device of any of the preceding claims further comprising watering means configured to water the food located in the tank (3) and/or the food once dosed.

7. The device of any of the preceding claims further comprising removing means (4) configured to propel and remove the food received in the tank (3).

8. The device of any of the preceding claims further comprising driving means configured to drive the dosing plate (6) and/or to drive the removing means (4).

9. The device of the claims 7 or 8 wherein the removing means (4) comprise an agitator (40) configured to propel and remove the food received in the tank (3), being said agitator (40) rotatable around a rotation axis (41) which is operatively connected to the dosing plate (6) and/or to the driving means, and comprising blades (42) (43) (44), wherein at least one of these blades (42) (43) (44) is disposed at a different height from the others regarding the axial direction of the rotation axis (41).

10. The device of any of the preceding claims further comprising a plate frame (5A) engageable to the tank (3), wherein the inlet plate (5) is provided as a part of said plate frame (5A), and wherein the dosing plate (6) is engageable to the plate frame (5A).

11. The device of any of the preceding claims further comprising heating means configured to heat the water before the watering take place, and/or to heat the food before, during and/or after the dosing.

12. The device of any of the preceding claims wherein the outlet plate (7) is operatively connected to a plurality of ribs (73) configured to allow the aeration of the outlet plate (7), wherein the plurality of ribs (73) is provided in the outlet plate (7) or in the plate frame (5A).

13. The device of any of the claims 6 to 12 further comprises at least an elongated plate (31) extending from the outlet plate (7) configured to avoid the watering goes beyond the food once dosed, wherein the elongated plate (31) is provided in the tank (3) or in the plate frame (5A) or operatively connected to them.

14. Food dispenser (10) for dispensing food automatically comprising the dosing device (1) of any of the claims 1 to 13.

**Patentansprüche**

1. Dosiervorrichtung (1) für eine Lebensmittelausgabevorrichtung, die Folgendes umfasst:

     - einen Tank (3), der dazu ausgelegt ist, ein Lebensmittel aufzunehmen und zu speichern;
     - eine Dosierplatte (6), die mit Bezug auf den Tank (3), der mindestens ein Fach (60) umfasst, das dazu ausgelegt ist, das Lebensmittel aufzunehmen und zu messen, bewegbar ist; und
     - eine Auslassplatte (7), die mindestens ein Auslassloch (70) umfasst, wobei die Auslassplatte (7) dazu ausgelegt ist, das Fach (60) zu sperren und zu entsperren, und wobei das Fach (60) dazu ausgelegt ist, eine Fluidkommunikation mit dem Auslassloch (70) herzustellen;

**dadurch gekennzeichnet, dass** sie Folgendes umfasst:

- mindestens eine Düse (15), die dazu ausgelegt ist, einen Wassersprühkegel (16) über das Lebensmittel zu injiziieren, nachdem es von der Dosiervorrichtung (1) in einer Schüssel oder einer Wanne dosiert wurde, wobei die Düse (15), die in der Dosiervorrichtung (1) bereitgestelltist, dazu ausgelegt ist, gemäß der dlogenden Formel H=

$$R / \tan(h) - k \text{ platziert zu werden,}$$

wobei:

H: Höhe der Düse (15) über dem Lebensmittel in Millimeter
R: Radius der Schüssel oder der Wanne, wo das Lebensmittel dosiert wird, in Millimeter
tan: Tangens
h: mathematische Konstante, im Bereich von 30-90, vorzugsweise im Bereich von 60-68, insbesondere 64 und
k: mathematische Konstante, im Bereich von 0-20, vorzugsweise im Bereich von 9-12, insbesondere 10,6.

2. Vorrichtung nach Anspruch 1, die ferner eine Einlassplatte (5) umfasst, die mindestens ein Einlassloch (50) umfasst; wobei die Dosierplatte (6) dazu ausgelegt ist, das Einlassloch (50) zu sperren oder zu entsperren, und wobei das Einlassloch (50) dazu ausgelegt ist, eine Fluidkommunikation mit dem Fach (60) herzustellen.

3. Vorrichtung nach Anspruch 2, die ferner eine Zwischenplatte (8) neben der Einlassplatte (5) umfasst, wobei die Zwischenplatte (8) mindestens ein Zwischenloch (80) umfasst, das dazu ausgelegt ist, auf das Einlassloch (50) ausgerichtet zu werden und eine Fluidkommunikation mit dem Fach (60) der Dosierplatte (6) herzustellen.

4. Vorrichtung der Ansprüche 1 bis 3, wobei die Einlassplatte (5) mindestens ein inneres radiales Einlassloch (51) und mindestens ein äußeres radiales Einlassloch (52) umfasst, die Dosierplatte (6) mindestens ein inneres radiales Fach (61) und ein äußeres radiales Fach (62) umfasst, die Auslassplatte (7) mindestens ein inneres radiales Auslassloch (71) und ein äußeres radiales Auslassloch (72) umfasst und die Zwischenplatte (8) mindestens ein inneres radiales Zwischenloch (81) und mindestens ein äußeres radiales Zwischenloch (82) umfasst, wobei

das innere radiale Einlassloch (51) und das äußere radiale Auslassloch (52) dazu ausgelegt sind, von der Dosierplatte (6) gesperrt oder entsperrt zu werden, und das innere radiale Fach (61) und das äußere radiale Fach (62) dazu ausgelegt sind, eine Fluidkommunikation mit dem inneren Einlassloch (51) und mit dem äußeren Einlassloch (52) herzustellen;
das innere Auslassloch (71) und das äußere Auslassloch (72) dazu ausgelegt sind, jeweils mindestens teilweise auf das innere Fach (61) und das äußere Fach (62) ausgerichtet zu sein und eine Fluidkommunikation mit diesen herzustellen, wobei das innere radiale Fach (61) und das äußere radiale Fach (62) dazu ausgelegt sind, durch die Bewegung der Dosierplatte (6) gegen die Auslassplatte (7) gesperrt oder entsperrt zu werden; und
das innere Zwischenloch (81) und das äußere Zwischenloch (82) dazu ausgelegt sind, jeweils auf das innere Einlassloch (51) und auf das äußere Einlassloch (52) ausgerichtet zu sein.

5. Vorrichtung nach einem der vorhergehenden Ansprüche, die ferner Feuchtigkeitsextraktionsmittel umfasst, die dazu ausgelegt sind, die Feuchtigkeit in der Vorrichtung und/oder im Lebensmittel zu verringern oder zu beseitigen.

6. Vorrichtung nach einem der vorhergehenden Ansprüche, die ferner Bewässerungsmittel umfasst, die dazu ausgelegt sind, das im Tank (3) befindliche Lebensmittel und/oder das einmal dosierte Lebensmittel zu bewässern.

7. Vorrichtung nach einem der vorhergehenden Ansprüche, das ferner Entfernungsmittel (4) umfasst, die dazu ausgelegt sind, das in den Tank (3) aufgenommene Lebensmittel vorwärtszutreiben und zu entfernen.

8. Vorrichtung nach einem der vorhergehenden Ansprüche, die ferner Antriebsmittel umfasst, die dazu ausgelegt sind, die Dosierplatte (6) anzutreiben und/oder die Entfernungsmittel (4) anzutreiben.

9. Vorrichtung nach den Ansprüchen 7 oder 8, wobei die Entfernungsmittel (4) ein Rührwerk (40) umfassen, das dazu ausgelegt ist, das in den Tank (3) aufgenommene Lebensmittel vorwärtszutreiben und zu entfernen, wobei das Rührwerk (40) um eine Drehachse (41) drehbar ist, die mit der Dosierplatte (6) oder mit den Antriebsmitteln wirkverbunden ist, und Blätter (42) (43) (44) umfasst, wobei mindestens eines der Blätter (42) (43) (44) mit Bezug auf die Axialrichtung der Drehachse (41) gegenüber den anderen in einer anderen Höhe angeordnet ist.

10. Vorrichtung nach einem der vorhergehenden Ansprüche, die einen Plattenrahmen (5A) umfasst, der in den Tank (3) einrückbar ist, wobei die Einlassplatte (5) als Teil des Plattenrahmens (5A) bereitgestellt ist und wobei die Dosierplatte (6) in den Plattenrahmen (5A) einrückbar ist.

11. Vorrichtung nach einem der vorhergehenden Ansprüche, die ferner Heizmittel umfasst, die dazu ausgelegt sind, das Wasser zu erhitzen, bevor die Bewässerung stattfindet, und/oder das Lebensmittel vor, während und/oder nach der Dosierung zu erhitzen.

12. Vorrichtung nach einem der vorhergehenden Ansprüche, wobei die Auslassplatte (7) mit einer Vielzahl von Rippen (73) wirkverbunden ist, die dazu ausgelegt sind, die Belüftung der Auslassplatte (7) zu erlauben, wobei die Vielzahl von Rippen (73) in der Auslassplatte (7) oder im Plattenrahmen (5A) bereitgestellt ist.

13. Vorrichtung nach einem der Ansprüche 6 bis 12, die ferner eine längliche Platte (31) umfasst, die sich von der Auslassplatte (7) erstreckt und dazu ausgelegt ist, eine weitere Bewässerung nach der Dosierung des Lebensmittels zu vermeiden, wobei die längliche Platte (31) im Tank (3) oder im Plattenrahmen (5A) bereitgestellt oder mit denselben wirkverbunden ist.

14. Lebensmittelausgabevorrichtung (10) zum automatischen Ausgeben von Lebensmittel, die die Dosiervorrichtung (1) nach einem der Ansprüche 1 bis 13 umfasst.

**Revendications**

1. Dispositif de dosage (1) destiné à un distributeur d'aliments, comprenant :

   - un réservoir (3) conçu pour recevoir et stocker des aliments ;
   - une plaque de dosage (6) mobile par rapport au réservoir (3) comprenant au moins un compartiment (60) conçu pour recevoir et mesurer les aliments ; et
   - une plaque de sortie (7) comprenant au moins un orifice de sortie (70), la plaque de sortie (7) étant conçue pour bloquer ou débloquer le compartiment (60), et dans lequel le compartiment (60) est conçu pour établir une communication fluidique avec l'orifice de sortie (70) ;

**caractérisé en ce qu'**il comprend :

   - au moins une buse (15) conçue pour injecter un cône de pulvérisation d'eau (16) sur les aliments une fois dosés dans un bol ou plateau par le dispositif de dosage (1), dans lequel la buse (15), prévue dans le dispositif de dosage (1), est conçue pour être placée sur les aliments selon la formule suivante H = R / tan(h) - k dans lequel :

   H : hauteur de la buse (15) au-dessus des aliments en millimètres
   R : rayon en millimètres du bol ou plateau où les aliments sont dosés
   tan : tangente
   h : constante mathématique, dans la plage allant de 30 à 90, de préférence dans la plage allant de 60 à 68, en particulier 64, et
   k : constante mathématique, dans la plage allant de 0 à 20, de préférence dans la plage allant de 9 à 12, en particulier 10,6.

2. Dispositif selon la revendication 1 comprenant en outre une plaque d'entrée (5) comprenant au moins un orifice d'entrée (50) ; dans lequel la plaque de dosage (6) est conçue pour bloquer ou débloquer l'orifice d'entrée (50), et dans lequel l'orifice d'entrée (50) est conçu pour établir une communication fluidique avec le compartiment (60).

3. Dispositif selon la revendication 2 comprenant en outre une plaque intermédiaire (8) adjacente à la plaque d'entrée (5), la plaque intermédiaire (8) comprenant au moins un orifice intermédiaire (80) conçu pour être aligné avec l'orifice d'entrée (50) et pour établir une communication fluidique avec le compartiment (60) de la plaque de dosage (6).

4. Dispositif selon les revendications 1 à 3 dans lequel la plaque d'entrée (5) comprend au moins un orifice d'entrée radial interne (51) et au moins un orifice d'entrée radial externe (52), la plaque de dosage (6) comprend au moins un compartiment radial interne (61) et un compartiment radial externe (62), la plaque de sortie (7) comprend au moins un orifice de sortie radial interne (71) et un orifice de sortie radial externe (72), et la plaque intermédiaire (8) comprend au moins un orifice intermédiaire radial interne (81) et au moins un orifice intermédiaire radial externe (82), dans lequel

   l'orifice d'entrée radial interne (51) et l'orifice de sortie radial externe (52) sont conçus pour être bloqués ou débloqués par la plaque de dosage (6), et le compartiment radial interne (61) et le compartiment radial externe (62) sont conçus pour établir une communication fluidique avec l'orifice d'entrée interne (51) et avec l'orifice d'entrée externe (52 ;

l'orifice de sortie interne (71) et l'orifice de sortie externe (72) sont conçus pour être respectivement au moins partiellement alignés avec le compartiment interne (61) et le compartiment externe (62) établissant une communication fluidique avec eux, dans lequel ledit compartiment radial interne (61) et ledit compartiment radial externe (62) sont conçus pour être bloqués ou débloqués contre la plaque de sortie (7) par le mouvement de la plaque de dosage (6) ; et

l'orifice intermédiaire interne (81) et l'orifice intermédiaire externe (82) sont conçus pour être alignés respectivement avec l'orifice d'entrée interne (51) et avec l'orifice d'entrée externe (52).

5. Dispositif selon l'une quelconque des revendications précédentes comprenant en outre des moyens d'extraction d'humidité conçus pour réduire ou éliminer l'humidité dans le dispositif et/ou dans les aliments.

6. Dispositif selon l'une quelconque des revendications précédentes comprenant en outre des moyens d'aspersion conçus pour asperger les aliments situés dans le réservoir (3) et/ou les aliments une fois dosés.

7. Dispositif selon l'une quelconque des revendications précédentes comprenant en outre des moyens de retrait (4) conçus pour propulser et retirer les aliments reçus dans le réservoir (3).

8. Dispositif selon l'une quelconque des revendications précédentes comprenant en outre des moyens d'entraînement conçus pour entraîner la plaque de dosage (6) et/ou pour entraîner les moyens de retrait (4).

9. Dispositif selon les revendications 7 ou 8 dans lequel les moyens de retrait (4) comprennent un agitateur (40) conçu pour propulser et retirer les aliments reçus dans le réservoir (3), ledit agitateur (40) pouvant tourner autour d'un axe de rotation (41) qui est relié fonctionnellement à la plaque de dosage (6) et/ou aux moyens d'entraînement, et comprenant des pales (42) (43) (44), dans lequel au moins l'une de ces pales (42) (43) (44) est disposée à une hauteur différente des autres par rapport à la direction axiale de l'axe de rotation (41).

10. Dispositif selon l'une quelconque des revendications précédentes comprenant en outre un bâti de plaque (5A) pouvant venir en prise avec le réservoir (3), dans lequel la plaque d'entrée (5) fait partie intégrante du bâti de plaque (5A), et dans lequel la plaque de dosage (6) peut venir en prise avec le bâti de plaque (5A).

11. Dispositif selon l'une quelconque des revendications précédentes comprenant en outre des moyens de chauffage conçus pour chauffer l'eau avant l'aspersion, et/ou pour chauffer les aliments avant, pendant et/ou après le dosage.

12. Dispositif selon l'une quelconque des revendications précédentes dans lequel la plaque de sortie (7) est fonctionnellement reliée à une pluralité de nervures (73) conçues pour permettre l'aération de la plaque de sortie (7), dans lequel la pluralité de nervures (73) est prévue dans la plaque de sortie (7) ou dans le bâti de plaque (5A).

13. Dispositif selon l'une quelconque des revendications 6 à 12 comprenant en outre au moins une plaque allongée (31) s'étendant à partir de la plaque de sortie (7) conçue pour éviter que l'aspersion ne dépasse les aliments une fois dosés, dans lequel la plaque allongée (31) est prévue dans le réservoir (3) ou dans le bâti de plaque (5A) ou est fonctionnellement reliée à ces derniers.

14. Distributeur d'aliments (10) pour la distribution automatique d'aliments comprenant le dispositif de dosage (1) selon l'une quelconque des revendications 1 à 13.

# FIG. 1

# FIG. 2

# FIG. 3

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2944707 A

- US 8074602 B